# EUROPÄISCHE PATENTSCHRIFT

(11) **EP 1 137 701 B1**
(45) Veröffentlichungstag und Bekanntmachung des Hinweises auf die Patenterteilung: **05.06.2002**
(21) Anmeldenummer: 99972233.3
(22) Anmeldetag: 05.11.1999
(51) Int. Cl.: C08J 9/00, C08J 9/16

(54) **GRAPHITPARTIKEL ENTHALTENDE EXPANDIERBARE STYROLPOLYMERISATE**
EXPANDABLE STYRENE POLYMERS CONTAINING GRAPHITE PARTICLES
POLYMERES STYRENE EXPANSIBLES CONTENANT DES PARTICULES DE GRAPHITE

(30) Priorität: 16.11.1998 DE 19852678
(43) Veröffentlichungstag der Anmeldung: 04.10.2001
(73) Patentinhaber: BASF AKTIENGESELLSCHAFT, 67056 Ludwigshafen (DE)
(72) Erfinder: GLÜCK, Guiscard, D-55129 Mainz (DE)
(86) Internationale Anmeldenummer: EP9908465
(87) Internationale Veröffentlichungsnummer: WO0029471

(56) Entgegenhaltungen:
- EP-A- 0 863 175
- DE-U- 29 616 364
- GB-A- 1 006 926

## Beschreibung

Die Erfindung betrifft die Herstellung teilchenförmiger, Graphitpartikel enthaltender expandierbarer Styrolpolymerisate.

Polystyrolpartikelschaumstoffe sind seit langer Zeit bekannt und haben sich auf vielen Gebieten bewährt. Die Herstellung derartiger Schaumstoffe erfolgt durch Aufschäumen von mit Treibmitteln imprägnierten Polystyrolpartikeln und das nachfolgende Verschweißen der so hergestellten Schaumpartikel zu Formkörpern. Ein wesentliches Einsatzgebiet ist die Wärmedämmung im Bauwesen.

Die zur Wärmedämmung eingesetzten Schaumstoffplatten aus Polystyrolpartikelschaum haben zumeist Dichten von mindestens 30 g/l, da bei diesen Dichten die Wärmeleitfähigkeit des Polystyrolpartikelschaums ein Minimum aufweist. Aus Gründen der Materialeinsparung ist es wünschenswert, Schaumstoffplatten mit geringeren Dichten, insbesondere ≤ 15 g/l, zur Wärmeisolation einzusetzen. Die Herstellung derartiger Schaumstoffe ist technisch kein Problem. Derartige Schaumstoffplatten mit geringerer Dichte weisen jedoch eine drastisch verschlechterte Wärmedämmfähigkeit auf, so daß sie die Anforderungen der Wärmeleitklasse 035 (DIN 18 164, Teil 1) nicht erfüllen.

In den Patentanmeldungen PCT/EP 97/02457 und PCT/EP 97/02458 wird vorgeschlagen, Graphitpartikel in teilchenförmige, expandierbare Styrolpolymerisate einzuarbeiten, wodurch die Wärmeleitfähigkeit von daraus hergestellten Schaumstoffen herabgesetzt werden kann. Die dabei eingesetzten Graphitpartikel weisen eine Partikelgröße von vorzugsweise 1 bis 50 µm auf; größere Graphitpartikel konnten bisher bei der bevorzugten Herstellung durch Suspensionspolymerisation in Gegenwart des Graphits gar nicht eingesetzt werden, da stets der Polymerisationsansatz koagulierte.

Es wurde nun gefunden, daß die radikalische Polymerisation von Styrol in wässriger Suspension in Gegenwart von Graphit mit einer Partikelgröße von mehr als 50 µm dann möglich wird, wenn man die Graphitpartikel, vorzugsweise in Styrol suspendiert, dem Polymerisationsansatz bei einem Umsatz von 10 bis 100 % zusetzt.

Überraschenderweise hat sich gezeigt, daß Schaumstoffe aus expandierbaren Styrolpolymerisaten, welche Graphit einer Partikelgröße von mehr als 50 µm enthalten, eine höhere Schallabsorption und eine geringere Schwindung aufweisen als Schaumstoffe aus expandierbaren Styrolpolymerisaten mit Graphit einer Partikelgröße von weniger als 50 µm.

Teilchenförmige, expandierbare Styrolpolymerisate entsprechend der Erfindung weisen 0,1 bis 25, vorzugsweise 1 bis 10 Gew.-% Graphitpartikel mit einer mittleren Partikelgröße von mehr als 50 µm auf. Die mittlere Partikelgröße ergibt sich aus der Analyse mittels Fraunhofer-Beugung; unter Partikelgröße ist der längste Durchmesser der Partikel zu verstehen. Vorzugsweise soll die mittlere Partikelgröße zwischen 55 und 200 µm, insbesondere zwischen 60 und 150 µm betragen.

Gegenstand der Erfindung ist ein Verfahren zur Herstellung von teilchenförmigen expandierbaren Styrolpolymerisaten durch Polymerisation von Styrol, gegebenenfalls zusammen mit bis zu 20 % seines Gewichts an Comonomeren, in wässriger Suspension in Gegenwart von Graphit und Zusatz von Treibmitteln vor, während oder nach der Polymerisation, wobei man die Graphitpartikel mit einer mittleren Partikelgröße von mehr als 50 µm dem Polymerisationsansatz bei einem Monomer-Umsatz von 10 bis 100 % zusetzt.

Unter expandierbaren Styrolpolymerisaten werden Treibmittel enthaltende Styrolpolymerisate verstanden.

Die erfindungsgemäßen expandierbaren Styrolpolymerisate enthalten als Polymermatrix insbesondere Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder α-Methylstyrol.

Bei der erfindungsgemäßen Suspensionspolymerisation können die üblichen Hilfsmittel, wie z.B. Peroxid-Initiatoren, Suspensionsstabilisatoren, Treibmittel, Kettenüberträger, Expandierhilfsmittel, Keimbildner und Weichmacher zugesetzt werden. Besonders bevorzugt ist der Zusatz von Flammschutzmitteln, vorzugsweise in Mengen von 0,1 bis 6 Gew.-% und von Flammschutzsynergisten in Mengen von 0,1 bis 1 Gew.-%, jeweils bezogen auf das resultierende Styrolpolymerisat. Bevorzugte Flammschutzmittel sind aliphatische, cycloaliphatische und aromatische Bromverbindungen, wie Hexabromcyclododecan, Pentabrommonochlorcyclohexan und Pentabromphencylallylether. Geeignete Synergisten sind C-C- oder O-O-labile organische Verbindungen, wie Dicumyl und Dicumylperoxid. Treibmittel werden in Mengen von 3 bis 10 Gew.-%, bezogen auf Styrolpolymerisat zugesetzt. Man kann sie vor, während oder nach der Polymerisation der Suspension zusetzen. Geeignete Treibmittel sind aliphatische Kohlenwasserstoffe mit 4 bis 6 Kohlenstoffatome. Es ist vorteilhaft, als Suspensionsstabilisatoren anorganische Pickering-Dispergatoren, z.B. Magnesiumpyrophosphat oder Calciumphosphat einzusetzen.

Die im Verlauf der Suspensionspolymerisation zugesetzten Graphitpartikel werden vorher zweckmäßigerweise in einem organischen Lösungsmittel, bevorzugt in Styrol suspendiert. Besonders günstig ist es, als Suspensionsmittel eine Lösung von Polystyrol in Styrol einzusetzen. Möglich ist auch die Zudosierung von Graphit als Polystyrolbatch. Das Gewichtsverhältnis Graphit zu Suspensionsmittel beträgt dabei vorzugsweise 80 : 20 bis 20 : 80, insbesondere etwa 50 : 50.

Erfindungsgemäß wird die Graphitsuspension dem Polymerisationsansatz bei einem Monomerenumsatz zwischen 10 und 100 %, vorzugsweise zwischen 20 und 90 % und insbesondere zwischen 25 und 75 % zugesetzt. Setzt man die Graphitpartikel erst relativ spät zu, dann erhält man Polystyrolpartikel, die eine Graphit enthaltende Polystyrolschale aufweisen. Derartige expandierbare Polystyrolpartikel zeichnen sich durch gute antistatische Eigenschaften, d.h. durch eine gute Rieselfähigkeit aus.

Grundsätzlich kann man die erfindungsgemäßen teilchenförmigen, expandierbaren Styrolpolymerisats auch dadurch herstellen, daß man die Graphitpartikel in einem Extruder in eine Schmelze von Polystyrol und Treibmittel einarbeitet und den ausgepreßten Strang granuliert.

Die expandierbaren, Graphitpartikel enthaltenden Styrolpolymerisate können zu Polystyrolschaumstoffen mit Dichten von bevorzugt 5-80 g/l, insbesondere von 10 - 30 g/l, verarbeitet werden.

Hierzu werden die expandierbaren Partikel vorgeschäumt. Dies geschieht zumeist durch Erwärmen der Partikel mit Wasserdampf in sogenannten Vorschäumern.

Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

Ein weiterer Gegenstand der Erfindung sind Polystyrolpartikelschaumstoffe, die 0,1 bis 25 Gew.-% Graphitpartikel mit einer mittleren Partikelgröße von mehr als 50 µm enthalten.

Derartige Schaumstoffe zeichnen sich nicht nur durch eine hervorragende Wärmeisolierung aus, sondern sie zeigen auch günstige Schallisoliereigenschaften und eine geringe Schwindung. Letzteres ist wichtig bei der Herstellung von größeren Formteilen, z.B. bei Schaumstoffblöcken, die nach der Entnahme aus dem Formteilautomaten oft zur Bildung von Einfallstellen neigen und selbst noch nach Tagen der Lagerung Schwindung zeigen, was bei den meisten Anwendungen aufgrund der geforderten Dimensionsstabilität nicht akzeptabel ist.

### Beispiel

In 18,4 kg Styrol werden 61,0 g Dicumylperoxid, 40,0 g Dicumyl, 15 g Hexabromcyclododecan und 20,2 g Dibenzoylperoxid gelöst. Die organische Phase wird in 20,0 l vollentsalztes Wasser in einem 50 l Rührkessel eingebracht. Die wäßrige Phase enthält 35,0 g Natriumpyrophosphat und 70,0 g Magnesiumsulfat (Bittersalz). Man erhitzt die Suspension auf 80°C. Nach 110 Minuten bei einem Styrolumsatz von etwa 30 % werden 1000 ml Styrol zudosiert, in welchem 650 g Graphit mit einer mittleren Partikelgröße von 75 µm (KP 99,5; Graphitwerk Kropfmühl), suspendiert sind. Nach weitern 30 Minuten wird 1,8 g Emulgator K 30 (Bayer AG) zugegeben. Nach weiteren 30 Minuten wird 1,60 kg Pentan nachdosiert und bei 125°C wird auspolymerisiert. Die erhaltenen treibmittelhaltigen Polystyrolperlen werden abdekantiert, gewaschen und getrocknet. Sie werden nach üblichem Verfahren zu Schaumpartikeln verschäumt, die zu einem Schaumstoffblock der Dichte von 10 g/l versintert werden.

Dieser weist nur eine vernachlässigbare Schwindung auf, daraus hergestellte Schaumstoffplatten zeigen ein gutes Schallabsorptionsvermögen.

## Patentansprüche

1. Verfahren zur Herstellung von teilchenförmigen expandierbaren Styrolpolymerisaten durch radikalische Polymerisation von Styrol, gegebenenfalls zusammen mit bis zu 20 % seines Gewichts an Comonomeren, in wässriger Suspension in Gegenwart von Graphit und Zusatz von Treibmitteln vor, während oder nach der Polymerisation, **dadurch gekennzeichnet, daß** man Graphitpartikel mit einer mittleren Partikelgröße von mehr als 50 µm dem Polymerisationsansatz bei einem Monomer-Umsatz von 10 bis 100 % zusetzt.

2. Verfahren nach Anspruch 1, **dadurch gekennzeichnet, daß** man die Graphitpartikel bei einem Umsatz von 20 bis 90 % zusetzt.

3. Verfahren nach Anspruch 1, **dadurch gekennzeichnet, daß** man die Graphitpartikel in Styrol suspendiert, dem Polymerisationsansatz zusetzt.

4. Verfahren nach Anspruch 1, **dadurch gekennzeichnet, daß** die Polymerisation in Gegenwart von 0,1 bis 25 Gew.-% Graphit, bezogen auf die Monomeren, durchgeführt wird.

5. Verfahren nach Anspruch 1, **dadurch gekennzeichnet, daß** Graphitpartikel mit einer mittleren Partikelgröße von 55 bis 200 µm eingesetzt werden.

6. Verwendung der nach Anspruch 1 hergestellten expandierbaren Styrolpolymerisate zur Herstellung von Schaumstoffen.

## Claims

1. A process for preparing expandable polystyrene beads by free-radical polymerization of styrene, where appropriate together with up to 20% of its weight of comonomers, in aqueous suspension in the presence of graphite and with addition of blowing agents prior to, during or after the polymerization, which comprises adding graphite particles with an average particle size of more than 50 µm to the polymerization mixture at a monomer conversion of from 10 to 100%.

2. A process as claimed in claim 1, wherein the graphite particles are added at a conversion of from 20 to 90%.

3. A process as claimed in claim 1, wherein the graphite particles have been suspended in styrene before they are added to the polymerization mixture.

4. A process as claimed in claim 1, wherein the polymerization is carried out in the presence of from 0.1 to 25% by weight of graphite, based on the monomers.

5. A process as claimed in claim 1, wherein the graphite used has an average particle size of from

6. The use of the expandable styrenes prepared as claimed in claim 1 for producing foams.

## Revendications

1. Procédé pour la préparation de polymères expansibles de styrène, en particules, par polymérisation radicalaire de styrène, éventuellement conjointement avec jusqu'à 20 % de son poids de comonomères, en suspension aqueuse en présence de graphite et addition d'agents d'expansion, avant, pendant ou après la polymérisation, **caractérisé par le fait qu'**on ajoute des particules de graphite ayant une taille moyenne de particules supérieure à 50 µm pour une transformation du monomère de 10 à 100 %.

2. Procédé selon la revendication 1, **caractérisé par le fait qu'**on ajoute les particules de graphite pour une transformation de 20 à 90 %.

3. Procédé selon la revendication 1, **caractérisé par le fait qu'**on ajoute les particules de graphite en suspension dans du styrène, dans la charge de polymérisation.

4. Procédé selon la revendication 1, **caractérisé par le fait qu'**on effectue la polymérisation en présence de 0,1 à 25 % en poids de graphite, par rapport aux monomères.

5. Procédé selon la revendication 1, **caractérisé par le fait qu'**on utilise des particules de graphite ayant une taille moyenne de particules de 55 à 200 µm.

6. Utilisation des polymères de styrène expansibles préparés selon la revendication 1 pour la préparation de matières alvéolaires.
